# EUROPÄISCHE PATENTANMELDUNG

(11) **EP 1 884 690 A1**
(43) Veröffentlichungstag der Anmeldung: **06.02.2008**
(21) Anmeldenummer: 07013175.0
(22) Anmeldetag: 05.07.2007
(51) Int. Cl.: F16J 15/10, F16J 15/12, F01N 7/08

(54) **Hochtemperatur-Dichtung**

(30) Priorität: 26.07.2006 DE 102006034473
(71) Anmelder: Carl Freudenberg KG, 69469 Weinheim (DE)
(72) Erfinder: Irmler, Josef, 82547 Münsing (DE)

(57) **Zusammenfassung**

Hochtemperatur-Dichtung (1) aus einem Glimmerwerkstoff, insbesondere zum Abdichten von Rohrverbindungen in Abgasanlagen von Verbrennungsmotoren, dadurch gekennzeichnet, dass die Dichtung als Dichtring (2) ausgebildet ist und radial übereinander liegende Lagen aus aufgewickeltem Glimmerbahnmaterial umfasst.

## Beschreibung

### Technisches Gebiet

Die Erfindung betrifft eine Hochtemperatur-Dichtung aus einem Glimmerwerkstoff, insbesondere zum Abdichten von Rohrverbindungen in Abgasanlagen von Verbrennungsmotoren.

### Stand der Technik

Eine Hochtemperatur-Dichtung der gattungsgemäßen Art ist aus der DE 35 12 842 C2 bekannt. Es handelt sich hierbei um eine Flachdichtung für Flanschverbindungen aus einem Glimmerwerkstoff, der eine Vielzahl von übereinander geschichteten Glimmerscheibchen enthält, die ihrerseits von einer Mehrzahl von dünnsten, von der natürlichen Materialbildung zusammengehaltenen Glimmerplättchen gebildet sind. Der Glimmerwerkstoff ist mit einem Bindemittel imprägniert, das in den Überlappungsbereichen unmittelbar übereinander liegender Glimmerscheibchen zwischen liegend angeordnet ist. Die bekannte Flachdichtung, die insbesondere in Flanschverbindungen von Abgasanlagen für Verbrennungsmotoren Anwendung findet, zeichnet sich durch eine sehr gute Dichtwirkung aus, insbesondere im Hochtemperaturbereich bei Temperaturen > 600 °C. Solch hohe Temperaturen werden heutzutage aus verschiedenen technischen Gründen, wie z. B. Staudruck durch λ-Sonde, schlechtere Wärmeabfuhr usw., in den Abgasanlagen moderner Verbrennungskraftmaschinen ohne Weiteres erreicht. Die sehr gute Dichtwirkung der bekannten Dichtung im Hochtemperaturbereich ist insbesondere darauf zurückzuführen, dass das Glimmermaterial sich bei sehr hohen Temperaturen (etwa im Bereich > 600 °C) aufbläht und damit Temperatur bedingten Verwerfungen des Flanschmaterials entgegenwirkt. Die Dichtwirkung wird dadurch gerade im Hochtemperaturbereich verstärkt. Auch das Bindemittel ist gemäß der DE 35 12 842 C2 so gewählt, dass es die progressive Dickenzunahme des Werkstoffs bei hohen Temperaturen noch unterstützt.

Neben den genannten Flanschverbindungen für Rohre gibt es in Abgasanlagen, insbesondere im Bereich der Nutzfahrzeuge, auch noch Rohrleitungen, die sich aus mehreren ineinander bzw. aufeinander gesteckten Rohrstücken zusammensetzen. Die Abdichtung erfolgt hierbei in der Regel mittels Dichtringen aus Graphit, die in den Überdeckungsbereichen der Rohrstückenden zwischen mit den Rohrstückenden verbundenen radialen Ringflächen angeordnet sind. Die entsprechenden Rohrstückenden können hierzu Wanddicken- und/oder Durchmessersprünge aufweisen, beispielsweise in Form von zylindrischen Innenerweiterungen und/oder Außendurchmesserverringerungen. Nachteilig an den bekannten Dichtringen ist die nicht ausreichende Temperaturbeständigkeit des Graphits.

### Darstellung der Erfindung

Aufgabe der Erfindung ist, eine Hochtemperatur-Dichtung, insbesondere zur Abdichtung von Rohrleitungen, die sich aus ineinander oder aufeinander steckbaren Rohrstücken zusammensetzen, bereitzustellen, welche einfach und kostengünstig herstellbar ist und auch Temperaturen oberhalb von 600 °C noch problemlos standhält, ohne in ihrer Dichtwirkung beeinträchtigt zu werden.

Diese Aufgabe wird mit einer Hochtemperaturdichtung mit allen Merkmalen des Patentanspruchs 1 gelöst. Vorteilhafte Ausgestaltungen der Erfindung werden in den Unteransprüchen beschrieben.

Gemäß der Erfindung ist bei einer Hochtemperatur-Dichtung aus einem Glimmerwerkstoff, insbesondere zum Abdichten von Rohrverbindungen in Abgasanlagen von Verbrennungsmotoren, vorgesehen, die Dichtung als Dichtring auszubilden, welcher radial übereinander liegende Lagen aus aufgewickeltem Glimmerbahnmaterial umfasst.

Es hat sich in überraschender Weise gezeigt, dass sich die bekannt guten Eigenschaften der aus der eingangs genannten DE 35 12 842 C2 bekannten Flachdichtungen auch für Ringdichtungen dadurch nutzen lassen, dass man ein Glimmerbahnmaterial entsprechend der gewünschten Geometrie der Dichtringe in Streifen unterteilt bzw. bereits streifenförmiges Material verwendet und die Streifen zu Ringdichtungen mit dem gewünschten Innen- bzw. Außendurchmesser aufwickelt. Die Einstellung der gewünschten Geometrie ist einfach. So lassen sich beispielsweise die Breite des Dichtrings in einfacher Weise über die Breite der Glimmerbahnstreifen und der Außendurchmesser über die Zahl der Wicklungen einstellen. Solche Maßnahmen müssen hier nicht näher erläutert werden. Sie liegen im Griffbereich des Durchschnittsfachmanns.

Vorteilhafterweise umfasst das Glimmerbahnmaterial einen bei hohen Temperaturen blähfähigen Glimmer, besonders bevorzugt wegen seiner guten Blähfähigkeit ein Glimmermaterial auf Basis eines Kalium-Magnesium-Aluminium-Hydrosilikats.

Das Glimmerbahnmaterial ist vorzugsweise, wie auch schon in der eingangs genannten DE 35 12 842 C2 beschrieben wird, auf die hiermit vollinhaltlich Bezug genommen wird, mit einem Bindemittel imprägniert, das die progressive Dickenzunahme des Glimmerwerkstoffs bei hohen Temperaturen noch unterstützt, vorzugsweise mit einem Bindemittel auf Basis eines Silikonharzes, besonders bevorzugt mit einem Bindemittel auf Basis eines Silikonharzes mit funktionellen Gruppen.

Vorzugsweise ist die als Dichtring ausgebildete Hochtemperatur-Dichtung hochverpresst. Es hat sich gezeigt, dass der Dichtring dann selbst bei längerer Lagerung unter ungünstigen Bedingungen, beispielsweise in feuchter Atmosphäre, nicht aufquillt, sondern dimensionsstabil bleibt.

Der erfindungsgemäße Hochtemperatur-Dichtring kann an mindestens einer seiner beiden radialen Stirnflächen einen radial umlaufenden, die radiale Stirnfläche und einen der beiden Umfangsränder des Dichtrings wenigstens teilweise übergreifenden Abstützring, vorzugsweise aus einem metallischen Werkstoff aufweisen. Dies hat den Vorteil, dass die Flächenpressung gleichmäßig auf den gesamten Wickelverbund eingeleitet wird. Bei axialer Belastung durch anstehenden Druck werden die radialen Anlagekräfte des Hochtemperatur-Dichtrings noch verstärkt. Es ergibt sich eine zusätzliche Dichtwirkung in axialer Richtung. Der erfindungsgemäße Dichtring kann daher sowohl zur axialen als auch radialen Abdichtung eingesetzt werden.

Vorteilhafterweise besteht der Abstützring aus Stahl, vorzugsweise aus Edelstahl, besonders bevorzugt aus einem hochwarmfesten Edelstahl.

In einer weiteren bevorzugten Ausführungsform der Erfindung ist zur Unterstützung der Querkräfte und der Dichtheit ein im Wickelverbund mitlaufendes Verstärkungsmaterial vorgesehen ist. Hierbei kann es sich ohne Beschränkung der Allgemeinheit beispielsweise um eine Metallfolie, oder aber auch um ein Metallnetz handeln.

In einer weiteren bevorzugten Ausführungsform der Erfindung sind die Glimmerbahnen und ggf. das Verstärkungsmaterial im Glimmerverbund miteinander verklebt, wobei unter Umweltschutzgesichtspunkten der verwendete Kleber vorteilhafterweise lösungsmittel- und rückstandsfrei sein kann.

Der erfindungsgemäße Hochtemperatur-Dichtring kann prinzipiell bei allen Hochtemperaturanwendungen, bei denen Dichtringe zum Einsatz kommen, Anwendung finden. Eine bevorzugte Anwendung ist jedoch die Abdichtung von heißgehenden Rohrleitungen, die sich aus Rohrstücken zusammen setzen, und hier insbesondere die Abdichtung von ineinander bzw. aufeinander steckbaren Rohrstückenden solcher Rohrleitungen in deren Überdeckungsbereich. Der erfindungsgemäße Hochtemperatur-Dichtring soll ohne Beschränkung der Allgemeinheit insbesondere im Abgasstrang von Nutzfahrzeugen, der sich üblicherweise aus mehreren Rohrstücken zusammensetzt, zum Einsatz kommen.

### Kurzbeschreibung der Zeichnung

Nachfolgend wir die Erfindung anhand der Zeichnung näher erläutert.

Es zeigen:
- Fig. 1:: eine erfindungsgemäße Hochtemperatur-Dichtung gemäß einer bevorzugten Ausführungsform der Erfindung mit einem an der inneren Stirnfläche einseitig aufgebrachten Abstützring in Draufsicht;
- Fig. 2:: einen Schnitt durch die Hochtemperaturdichtung aus Fig. 1 entlang der Linie A - A;
- Fig. 3:: einen Schnitt des Details B aus Fig. 2 in vergrößertem Maßstab;
- Fig. 4:: eine Schnittdarstellung analog zu Fig. 3 einer Hochtemperatur-Dichtung gemäß einer weiteren Ausführungsform der Erfindung mit beidseitiger Abstützung;
- Fign. 5 a - c:: eine erfindungsgemäße Hochtemperatur-Dichtung in einer Montage- und Einbausituation;

### Ausführung der Erfindung

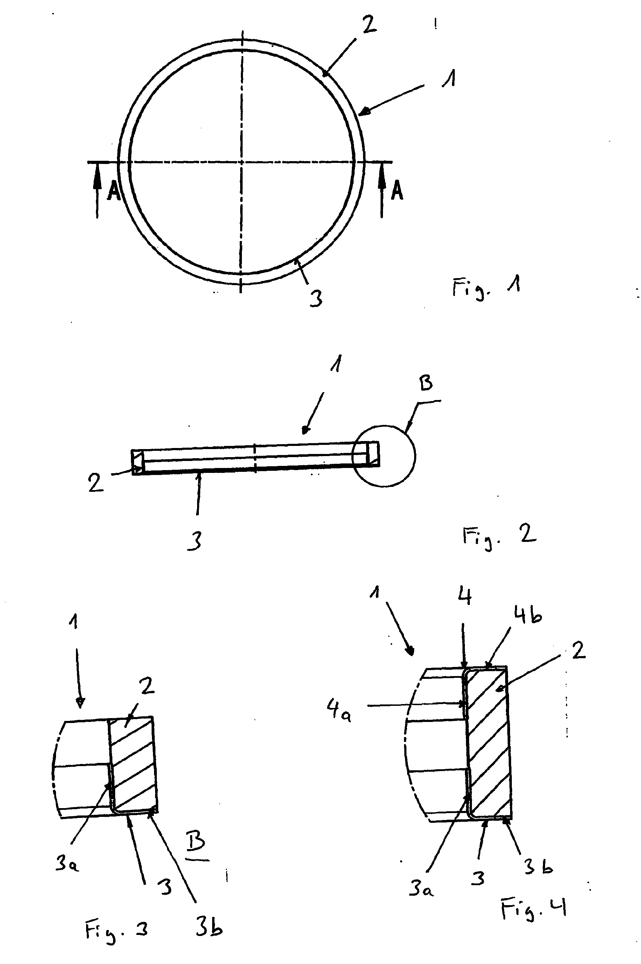

Man erkennt in den Figuren 1 und 2 eine Hochtemperatur-Dichtung 1, die gemäß einer bevorzugten Ausführungsform der Erfindung einen Ring 2 aus aufgewickeltem Glimmerwerkstoff und einen an der inneren radialen Stirnfläche im Bereich des unteren Umfangsrands angeordneten Abstützring 3 umfasst. Wie aus Fig. 3 ersichtlich ist, weist der Abstützring ein winkelförmiges Profil mit einem radialen Schenkel 3a und einem axialem Schenkel 3b auf, wobei der radiale Schenkel 3a ohne Beschränkung der Allgemeinheit die innere radiale Stirnfläche des Rings 2 nur im unteren Drittel und der axiale Schenkel 3b den unteren Umfangsrand des Rings 2 vollständig überdecken. Der Übergang vom radialen Schenkel 3a zum axialen Schenkel 3b ist bei der dargestellten Ausführungsform abgerundet ausgebildet. Der Abstützring und der Glimmerdichtring sind mittels Kleber und/oder metallischer Verkrallung miteinander verbunden.

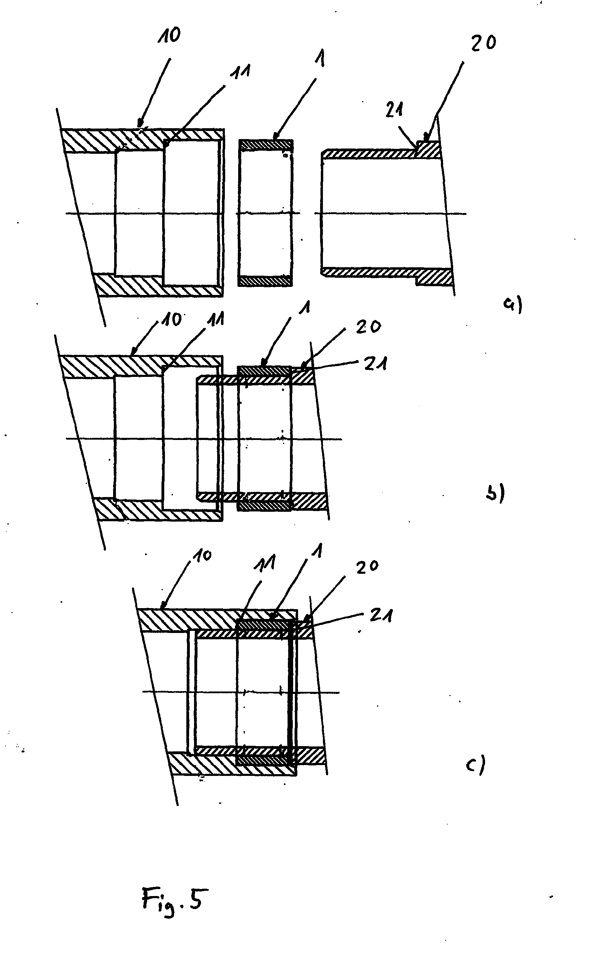

Fig. 4 zeigt in der gleiche Detailansicht wie Fig. 3 das Profil einer Hochtemperatur-Dichtung gemäß einer weiteren bevorzugten Ausführungsform der Erfindung. Dieser Hochtemperatur-Dichtung 1 weist neben dem Abstützring 3 am unteren Umfangsrand noch einen weiteren Abstützring 4 mit einem radialen Schenkel 4a und einem axialen Schenkel 4b am oberen Umfangsrand auf. Die Abstützringe 3 und 4 sind, wie man leicht erkennt, ohne Beschränkung der Allgemeinheit symmetrisch ausgebildet. Die beidseitige Abstützung hat den Vorteil der Nachkomprimierung des soft gehaltenen Hochtemperatur-Dichtung 1 durch eine Zunahme des Druckes und Beaufschlagung der Stirnflächen. Hierdurch kommt es zu einer verstärkten radialen Anpressung der Dichtflächen.

In den Fign. 5 a bis c ist die Montage und Einbausituation einer erfindungsgemäßen Hochtemperatur-Dichtung 1 dargestellt. Man erkennt in den Figuren zwei einander zugeordnete Rohrstückenden 10 und 20, die unter Zwischenschaltung der ringförmigen Hochtemperatur-Dichtung 1 in ihrem Überdeckungsbereich ineinander bzw. aufeinander steckbar sind. Es kann sich hierbei beispielsweise um eine Rohrleitung eines Abgasstrangs für eine Verbrennungskraftmaschine handeln.

Das Rohrstückende 10 weist hierzu in seinem Endbereich eine gestufte Innenumfangserweiterung unter Ausbildung einer ringförmigen Anlagefläche 11 für die Hochtemperatur-Dichtung 1 auf. Das Rohrstückende 20 ist in seinem Endbereich unter Ausbildung einer weiteren ringförmigen Anlagefläche 21 für die Hochtemperatur- Dichtung 1 in seinem Außenumfang verringert. Sowohl die Innenumfangserweiterung des Rohrstückendes 10 als auch die Außenumfangsverringerung der Rohrstückendes 20 sind bei der dargestellten Ausführungsform ohne Beschränkung der Allgemeinheit durch Wanddickensprünge realisiert.

Im montierten Zustand ist die ringförmige Hochtemperatur-Dichtung 1 auf das Rohrstückende 20 so weit aufgesteckt, dass sie mit einem ihrer beiden Umfangsränder an der ringförmigen Anlagefläche 21 zur Anlage kommt. Mit dem gegenüberliegenden Umfangsrand liegt sie an der ringförmigen Anlagefläche 11 des Rohrstückendes 10 an, das auf das Rohrstückende 20 und die ringförmige Hochtemperatur-Dichtring 1 aufgesteckt ist. Die Hochtemperatur-Dichtung 1 liegt somit im montierten Zustand mit ihren Umfangsrändern an den ringförmigen Anlageflächen 11 und 21, mit ihrer inneren radialen Stirnfläche an der Außenumfangsfläche des in seinem Endbereich in seinem Außenumfang verringerten Rohrstückendes 20 und mit ihrer äußeren radialen Stirnfläche an der inneren Umfangsfläche des in seinem Innenumfang erweiterten Rohrstückendes 10 an. Im Falle einer Temperaturerhöhung bis in den Hochtemperaturbereich hinein bläht sich der Glimmerwerkstoff auf. Es kommt zu einer progressiven Dickenzunahme der Hochtemperatur-Dichtung 1, durch die Wärmedehnung eventuell auftretenden Verwerfungen der Rohrstückenden werden vollständig kompensiert.

## Patentansprüche

1. Hochtemperatur-Dichtung (1) aus einem Glimmerwerkstoff, insbesondere zum Abdichten von Rohrverbindungen in Abgasanlagen von Verbrennungsmotoren, **dadurch gekennzeichnet, dass** die Dichtung als Dichtring (2) ausgebildet ist und radial übereinander liegende Lagen aus aufgewickeltem Glimmerbahnmaterial umfasst.

2. Hochtemperatur-Dichtung (1) nach Anspruch 1, **dadurch gekennzeichnet, dass** das Glimmerbahnmaterial einen bei hohen Temperaturen blähfähigen Glimmer umfasst.

3. Hochtemperatur-Dichtung (1) nach Anspruch 1 oder 2, **dadurch gekennzeichnet, dass** das Glimmerbahnmaterial ein Kalium-Magnesium-Aluminium-Hydrosilikat umfasst.

4. Hochtemperatur-Dichtung (1) nach einem der Ansprüche 1 bis 3, **dadurch gekennzeichnet, dass** das Glimmerbahnmaterial mit einem Bindemittel imprägniert ist.

5. Hochtemperatur-Dichtung (1) nach einem der Ansprüche 1 bis 4, **dadurch gekennzeichnet, dass** das Bindemittel ein Bindemittel auf Basis eines Silikonharzes, vorzugsweise eines Silikonharzes mit funktionellen Gruppen, umfasst.

6. Hochtemperatur-Dichtung (1) nach einem der Ansprüche 1 bis 5, **dadurch gekennzeichnet, dass** er hochverpresst ist.

7. Hochtemperatur-Dichtung (1) nach einem der Ansprüche 1 bis 6, **dadurch gekennzeichnet, dass** an mindestens einer der beiden radialen Stirnflächen des Dichtrings (2) ein radial umlaufender, die jeweilige Stirnfläche und einen der beiden Umfangsränder des Dichtrings wenigstens teilweise übergreifender Abstützring (3, 4) vorgesehen ist.

8. Hochtemperatur-Dichtung nach einem der Ansprüche 1 bis 7, **dadurch gekennzeichnet, dass** der Abstützring (3, 4) aus einem Metall, vorzugsweise aus Stahl, besonders bevorzugt aus Edelstahl besteht.

9. Hochtemperatur-Dichtung (1) nach einem der Ansprüche 1 bis 8, **dadurch gekennzeichnet, dass** im Wickelverbund mitlaufend ein Verstärkungsmaterial vorgesehen ist.

10. Hochtemperatur-Dichtung (1) nach einem der Ansprüche 1 bis 9, **dadurch gekennzeichnet, dass** das Verstärkungsmaterial eine Metallfolie umfasst.

11. Hochtemperatur-Dichtung (1) nach einem der Ansprüche 1 bis 10, **dadurch gekennzeichnet, dass** die Glimmerbahnen und das ggf. vorhandene Verstärkungsmaterial im Wickelverbund miteinander verklebt sind.

12. Hochtemperatur-Dichtung (1) nach einem der Ansprüche 1 bis 11, **dadurch gekennzeichnet, dass** der Kleber lösungsmittel- und rückstandsfrei ist.

13. Verwendung einer Hochtemperaturdichtung (1) nach einem der Ansprüche 1 bis 12 zum Abdichten einer aus ineinander bzw. aufeinander steckbaren Rohrstücken bestehenden Heißgasleitung in deren Überdeckungsbereich.
